# EUROPEAN PATENT APPLICATION

(11) **EP 2 885 981 A1**
(43) Date of publication of application: **24.06.2015**
(21) Application number: 14198638.0
(22) Date of filing: 17.12.2014
(51) Int. Cl.: A23L 1/314, A23L 1/03, A23L 1/317, A22C 13/00, A23L 1/0532, A23L 1/0522, A23L 1/0534

(54) **Composition for preparation of sausage casings**

(30) Priority: 20.12.2013 GB 201322772
(71) Applicant: DuPont Nutrition Biosciences ApS, 1001 Copenhagen K (DK)
(72) Inventor: Vogel, Christian, 8264 Eschenz (CH); Stenbaek, Dorthe, 8240 Risskov (DK)
(74) Representative: Alcock, David

(57) **Abstract**

There is provided a composition for preparation of a sausage casing, wherein the composition comprises
(i) alginate and
(ii) a meat surface culture.

## Description

The present invention relates to a composition for preparation of sausage casing, a casing composition, a process for preparing a meal sausage and the use of the present compositions.

The process is involved in preparing and fermenting meat sausages are discussed in detail in Handbook of Meat and Meat Processing 2nd Edition. As discussed in chapter 32 this document fermentation is particularly important preparing a meal sausage which is acceptable with regard to microbial content. In the preparation of particular sausages an important event that takes place in the last stages of fermentation is the growth of microorganisms such as yeast and moulds on the surface of the sausages. This step is not obligatory; however, it is particularly important because the microorganisms may enhance the water loss process by creating micro holes on the casings, they protect the sausages from oxidation because they create a protective layer against light and at the end of the ripening, they are able to keep moist the product, avoiding excessive drying.

Typically the cultures required for the growth of yeast and moulds on outer surface of sausages are applied to the surface by methods such as spraying or dipping. However, these processes add to the expense of production and also prone to result in contamination of the product with undesirable microorganisms.

The present invention alleviates the problems of the prior art.

In one aspect the present invention provides a composition for preparation of a sausage casing, wherein the composition comprises
(i) alginate;
(ii) a meat surface culture.

In one aspect the present invention provides a casing composition for preparing sausage casing, the casing composition comprising
(i) alginate;
(ii) a meat surface culture
(iii) water in an amount of at least 50 wt.% based on the total casing composition.

In one aspect the present invention provides a process for preparing a meat sausage, the process comprising the steps of
(a) preparing a casing composition comprising
   (i) alginate;
   (ii) a meat surface culture; and
   (iii) water in an amount of at least 50 wt.% based on the total casing composition.
   and
(b)
   (i) applying the casing composition to a meat batter; and
   (ii) causing the casing composition to gel and thereby form a casing around the meat batter;
   or
(c)
   (i) causing the casing composition to gel and thereby form a casing; and
   (ii) disposing a meat batter within the casing.

In one aspect the present invention provides a kit for preparation of a sausage casing, wherein the kit comprises
(i) alginate;
(ii) a meat surface culture;
   together with instructions for the preparation of a casing composition comprising
   (i) alginate;
   (ii) a meat surface culture
   (iii) water in an amount of at least 50 wt.% based on the total casing composition.

In one aspect the present invention provides use of a casing composition comprising
(i) alginate;
(ii) a meat surface culture
(iii) water in an amount of at least 50 wt.% based on the total casing composition.
for casing a sausage.

For ease of reference, these and further aspects of the present invention are now discussed under appropriate section headings. However, the teachings under each section are not necessarily limited to each particular section.

### DETAILED DESCRIPTION

### Alginate

As discussed herein, the composition of the present invention and the casing composition made therefrom contains alginate. The alginate may be provided in any suitable form. For example, the alginate will typically be provided in the form of a salt. In one aspect the alginate is selected from sodium alginate, potassium alginate and mixtures thereof. In one aspect the alginate is or comprises sodium alginate. In one aspect the alginate is or comprises potassium alginate. In one aspect the alginate is or comprises a mixture of sodium alginate and potassium alginate. In one aspect the alginate is sodium alginate. In one aspect the alginate is potassium alginate. On one aspect the alginate is a mixture of sodium alginate and potassium alginate.

Typically, any alginate which is suitable for manufacturing a sausage casing can be used within the present invention.

The alginate may be present in any suitable amount to provide the desired casing material. In the composition of the present invention (which is suitable for preparing the water containing casing composition) the alginate may be present in an amount of 20 to 99.9 wt.% based on the total composition. In the composition of the present invention (which is suitable for preparing the water containing casing composition) the alginate may be present in an amount of 30 to 99.9 wt.% based on the total composition. In the composition of the present invention (which is suitable for preparing the water containing casing composition) the alginate may be present in an amount of 40 to 99.9 wt.% based on the total composition. In the composition of the present invention (which is suitable for preparing the water containing casing composition) the alginate may be present in an amount of 50 to 99.9 wt.% based on the total composition. In the composition of the present invention (which is suitable for preparing the water containing casing composition) the alginate may be present in an amount of 60 to 99.9 wt.% based on the total composition. In the composition of the present invention (which is suitable for preparing the water containing casing composition) the alginate may be present in an amount of 70 to 99.9 wt.% based on the total composition. In the composition of the present invention (which is suitable for preparing the water containing casing composition) the alginate may be present in an amount of 80 to 99.9 wt.% based on the total composition. In the composition of the present invention (which is suitable for preparing the water containing casing composition) the alginate may be present in an amount of 90 to 99.9 wt.% based on the total composition.

The alginate may be present in any suitable amount to provide the desired casing material. In the composition of the present invention (which is suitable for preparing the water containing casing composition) the alginate may be present in an amount of 20 to 90 wt.% based on the total composition. In the composition of the present invention (which is suitable for preparing the water containing casing composition) the alginate may be present in an amount of 30 to 90 wt.% based on the total composition. In the composition of the present invention (which is suitable for preparing the water containing casing composition) the alginate may be present in an amount of 40 to 90 wt.% based on the total composition. In the composition of the present invention (which is suitable for preparing the water containing casing composition) the alginate may be present in an amount of 50 to 90 wt.% based on the total composition. In the composition of the present invention (which is suitable for preparing the water containing casing composition) the alginate may be present in an amount of 60 to 90 wt.% based on the total composition. In the composition of the present invention (which is suitable for preparing the water containing casing composition) the alginate may be present in an amount of 70 to 90 wt.% based on the total composition. In the composition of the present invention (which is suitable for preparing the water containing casing composition) the alginate may be present in an amount of 80 to 90 wt.% based on the total composition.

The alginate may be present in any suitable amount to provide the desired casing material. In the composition of the present invention (which is suitable for preparing the water containing casing composition) the alginate may be present in an amount of 25 to 85 wt.% based on the total composition. In the composition of the present invention (which is suitable for preparing the water containing casing composition) the alginate may be present in an amount of 35 to 85 wt.% based on the total composition. In the composition of the present invention (which is suitable for preparing the water containing casing composition) the alginate may be present in an amount of 45 to 85 wt.% based on the total composition. In the composition of the present invention (which is suitable for preparing the water containing casing composition) the alginate may be present in an amount of 55 to 85 wt.% based on the total composition. In the composition of the present invention (which is suitable for preparing the water containing casing composition) the alginate may be present in an amount of 65 to 85 wt.% based on the total composition. In the composition of the present invention (which is suitable for preparing the water containing casing composition) the alginate may be present in an amount of 75 to 85 wt.% based on the total composition.

### Casing Composition

As discussed herein, in one aspect the present invention provides a casing composition. This casing composition is a combination of the compositional present invention together with water. The present invention provides a casing composition for preparing sausage casing, the casing composition comprising
(i) alginate;
(ii) a meat surface culture
(iii) water in an amount of at least 50 wt.% based on the total casing composition.

The amount of water present in the casing composition may be determined by one skilled in the art. The amount of water may depend on the properties required for the final sausage casing. In one aspect, water is present in the casing composition in an amount of at least 55 wt.% based on the total casing composition. In one aspect, water is present in the casing composition in an amount of at least 60 wt.% based on the total casing composition. In one aspect, water is present in the casing composition in an amount of at least 65 wt.% based on the total casing composition. In one aspect, water is present in the casing composition in an amount of at least 70 wt.% based on the total casing composition. In one aspect, water is present in the casing composition in an amount of at least 75 wt.% based on the total casing composition. In one aspect, water is present in the casing composition in an amount of at least 80 wt.% based on the total casing composition. In one aspect, water is present in the casing composition in an amount of at least 85 wt.% based on the total casing composition.

In one aspect, water is present in the casing composition in an amount of no greater than 99 wt.% based on the total casing composition. In one aspect, water is present in the casing composition in an amount of no greater than 98 wt.% based on the total casing composition. In one aspect, water is present in the casing composition in an amount of no greater than 95 wt.% based on the total casing composition. In one aspect, water is present in the casing composition in an amount of no greater than 92 wt.% based on the total casing composition. In one aspect, water is present in the casing composition in an amount of no greater than 91 wt.% based on the total casing composition.

In one aspect, water is present in the casing composition in an amount of from 55 to 95 wt.% based on the total casing composition. In one aspect, water is present in the casing composition in an amount of from 55 to 95 wt.% based on the total casing composition. In one aspect, water is present in the casing composition in an amount of from 60 to 95 wt.% based on the total casing composition. In one aspect, water is present in the casing composition in an amount of from 65 to 95 wt.% based on the total casing composition. In one aspect, water is present in the casing composition in an amount of from 70 to 95 wt.% based on the total casing composition. In one aspect, water is present in the casing composition in an amount of from 75 to 95 wt.% based on the total casing composition. In one aspect, water is present in the casing composition in an amount of from 80 to 95 wt.% based on the total casing composition. In one aspect, water is present in the casing composition in an amount of from 85 to 95 wt.% based on the total casing composition. In one aspect, water is present in the casing composition in an amount of from 85 to 91 wt.% based on the total casing composition.

The amount of alginate present in the casing composition may be determined by one skilled in the art. The amount of alginate may depend on the properties required for the final sausage casing. In one aspect, alginate is present in the casing composition in an amount of at least 1 wt.% based on the total casing composition. In one aspect, alginate is present in the casing composition in an amount of at least 2 wt.% based on the total casing composition. In one aspect, alginate is present in the casing composition in an amount of at least 3 wt.% based on the total casing composition. In one aspect, alginate is present in the casing composition in an amount of at least 4 wt.% based on the total casing composition. In one aspect, alginate is present in the casing composition in an amount of at least 5 wt.% based on the total casing composition. In one aspect, alginate is present in the casing composition in an amount of at least 6 wt.% based on the total casing composition. In one aspect, alginate is present in the casing composition in an amount of at least 7 wt.% based on the total casing composition.

In one aspect, alginate is present in the casing composition in an amount of no greater than 20 wt.% based on the total casing composition. In one aspect, alginate is present in the casing composition in an amount of no greater than 19 wt.% based on the total casing composition. In one aspect, alginate is present in the casing composition in an amount of no greater than 18 wt.% based on the total casing composition. In one aspect, alginate is present in the casing composition in an amount of no greater than 17 wt.% based on the total casing composition. In one aspect, alginate is present in the casing composition in an amount of no greater than 16 wt.% based on the total casing composition. In one aspect, alginate is present in the casing composition in an amount of no greater than 15 wt.% based on the total casing composition. In one aspect, alginate is present in the casing composition in an amount of no greater than 14 wt.% based on the total casing composition. In one aspect, alginate is present in the casing composition in an amount of no greater than 13 wt.% based on the total casing composition. In one aspect, alginate is present in the casing composition in an amount of no greater than 12 wt.% based on the total casing composition. In one aspect, alginate is present in the casing composition in an amount of no greater than 11 wt.% based on the total casing composition. In one aspect, alginate is present in the casing composition in an amount of no greater than 10 wt.% based on the total casing composition. In one aspect, alginate is present in the casing composition in an amount of no greater than 9 wt.% based on the total casing composition. In one aspect, alginate is present in the casing composition in an amount of no greater than 8 wt.% based on the total casing composition.

In one aspect, alginate is present in the casing composition in an amount of from 1 to 20 wt.% based on the total casing composition. In one aspect, alginate is present in the casing composition in an amount of from 2 to 18 wt.% based on the total casing composition. In one aspect, alginate is present in the casing composition in an amount of from 2 to 16 wt.% based on the total casing composition. In one aspect, alginate is present in the casing composition in an amount of from 2 to 14 wt.% based on the total casing composition. In one aspect, alginate is present in the casing composition in an amount of from 2 to 12 wt.% based on the total casing composition. In one aspect, alginate is present in the casing composition in an amount of from 4 to 10 wt.% based on the total casing composition. In one aspect, alginate is present in the casing composition in an amount of from 5 to 9 wt.% based on the total casing composition. In one aspect, alginate is present in the casing composition in an amount of from 7 to 8 wt.% based on the total casing composition.

In one aspect, alginate is present in the casing composition in an amount of 5.6 to 9.6 wt.% based on the total coating composition, such as in an amount of 6.2 to 8.2 wt.% based on the total coating composition.

As will be understood by one skilled in the art, the casing composition of the present invention will typically be prepared from the composition of the present invention. However, as will be understood, it is not essential that casing composition of the present invention be prepared from the composition of the present invention. In one aspect the present invention provides a casing composition for preparing sausage casing, the casing composition comprising
(a) a composition as defined herein, and
(b) water in an amount of at least 50 wt.% based on the total casing composition.

In one aspect the casing composition comprises a composition as defined herein in an amount of 5 to 14 wt. % based on the total casing composition. In one aspect the casing composition comprises a composition as defined herein in an amount of 5 to 13 wt. % based on the total casing composition. In one aspect the casing composition comprises a composition as defined herein in an amount of 5 to 12 wt. % based on the total casing composition. In one aspect the casing composition comprises a composition as defined herein in an amount of 5.5 to 12 wt % based on the total casing composition. In one aspect the casing composition comprises a composition as defined herein in an amount of 6 to 12 wt. % based on the total casing composition. In one aspect the casing composition comprises a composition as defined herein in an amount of 7 to 12 wt.% based on the total casing composition. In one aspect the casing composition comprises a composition as defined herein in an amount of 7 to 11 wt. % based on the total casing composition. In one aspect the casing composition comprises a composition as defined herein in an amount of 8 to 10 wt.% based on the total casing composition.

### Further Ingredient(S) Of The Composition Or Of The Casing Composition

In one aspect of the present invention, the composition of the present invention may contain a further hydrocolloid. As will be understood by one skilled in the art reference to "further hydrocolloid" means a hydrocolloid other than alginate. In one aspect the composition of the present invention comprises a further hydrocolloid selected from cellulose gum, guar gum, locust bean gum, microcrystalline cellulose, carrageenan, pectin, gellan, glucomanans, succino-glucan and mixtures thereof. In one aspect the further hydrocolloid comprises or is cellulose gum. In one aspect the further hydrocolloid is cellulose gum.

The amount of further hydrocolloid present in the composition or casing composition may be determined by one skilled in the art. The amount of further hydrocolloid may depend on the properties required for the final sausage casing. In one aspect the further hydrocolloid is present in the casing composition in an amount of at least 5 wt.% based on the total composition. In one aspect the further hydrocolloid is present in the casing composition in an amount of at least 10 wt.% based on the total composition. In one aspect the further hydrocolloid is present in the casing composition in an amount of at least 15 wt.% based on the total composition. In one aspect the further hydrocolloid is present in the casing composition in an amount of at least 20 wt.% based on the total composition.

In one aspect the further hydrocolloid is present in the casing composition in an amount of no greater than 50 wt.% based on the total composition. In one aspect the further hydrocolloid is present in the casing composition in an amount of no greater than 40 wt.% based on the total composition. In one aspect the further hydrocolloid is present in the casing composition in an amount of no greater than 30 wt.% based on the total composition. An one aspect the further hydrocolloid is present in the casing composition in an amount of no greater than 20 wt.% based on the total composition.

In one aspect the further hydrocolloid is present in the casing composition in an amount of 5 to 50 wt.% based on the total composition. In one aspect the further hydrocolloid is present in the casing composition in an amount of 5 to 40 wt.% based on the total composition. In one aspect the further hydrocolloid is present in the casing composition in an amount of 5 to 30 wt.% based on the total composition. In one aspect the further hydrocolloid is present in the casing composition in an amount of 8 to 12 wt.% based on the total composition.

In one aspect the further hydrocolloid may be cellulose gum which is preferably present in an amount of 5 to 30 wt.% based on the total composition. In particular the further hydrocolloid may be cellulose gum which is preferably present in an amount of 8 to 12 wt.% based on the total composition.

In the casing composition of the present invention preferably the further hydrocolloid is present in an amount of 0.5 to 1.5 wt.% based on the total casing composition. Preferably the further hydrocolloid is present in an amount of 0.7 to 1.2 wt.% based on the total casing composition. In one preferred aspect the further hydrocolloid is present in an amount of 0.8 to 1 wt.% based on the total casing composition.

When the further hydrocolloid is cellulose gum in the said casing composition preferably cellulose gum is present in an amount of 0.5 to 1.5 wt.% based on the total casing composition. Preferably cellulose gum is present in an amount of 0.7 to 1.2 wt.% based on the total casing composition. In one preferred aspect cellulose gum is present in an amount of 0.8 to 1 wt.% based on the total casing composition.

In one aspect of the present invention, the composition of the present invention may further comprise starch, fibre or a mixture thereof. In one aspect of the present invention, the composition of the present invention may further comprise starch. In one aspect of the present invention, the composition of the present invention may further comprise fibre. In one aspect of the present invention, the composition of the present invention may further comprise a mixture of starch and fibre.

The amount of starch and fibre present in the composition or casing composition may be determined by one skilled in the art. The amount of starch and fibre may depend on the properties required for the final sausage casing. In one aspect the combined amount of starch and fibre present in the casing composition is at least 5 wt.% based on the total composition. In one aspect the combined amount of starch and fibre present in the casing composition is at least 10 wt.% based on the total composition. In one aspect the combined amount of starch and fibre present in the casing composition is at least 15 wt.% based on the total composition. In one aspect the combined amount of starch and fibre present in the casing composition is at least 20 wt.% based on the total composition.

In one aspect the combined amount of starch and fibre present in the casing composition is no greater than 50 wt.% based on the total composition. In one aspect the combined amount of starch and fibre present in the casing composition is no greater than 40 wt.% based on the total composition. In one aspect the combined amount of starch and fibre present in the casing composition is no greater than 30 wt.% based on the total composition. In one aspect the combined amount of starch and fibre present in the casing composition is no greater than 20 wt.% based on the total composition.

In one aspect the combined amount of starch and fibre present in the casing composition is from 5 to 50 wt.% based on the total composition. In one aspect the combined amount of starch and fibre present in the casing composition is from 5 to 40 wt.% based on the total composition In one aspect the combined amount of starch and fibre present in the casing composition is from 5 to 30 wt.% based on the total composition

In one preferred aspect the present invention provides a composition for preparation of a sausage casing, wherein the composition comprises
(i) alginate in an amount of 70 to 90 wt.% based on the total composition;
(ii) a further hydrocolloid, wherein the further hydrocolloid is other than alginate; and
(iii) starch and/or fibre.

According to the American Association of Cereal Chemists (AACC) definition dietary fiber is the edible parts of plants or analogous carbohydrates that are resistant to digestion and absorption in the human small intestine, with complete or partial fermentation in the large intestine. Dietary fiber includes polysaccharides, oligosaccharides, lignin, and associated plant substances. Dietary fibers promote beneficial physiologic effects including laxation, and/or blood cholesterol attenuation, and/or blood glucose attenuation.

As discussed herein the composition or casing composition may contain starch and/or fibre. As will be understood by one skilled in the art, this means the composition or casing composition may contain at least one of starch and fibre. In one aspect the composition or casing composition contains starch. In one aspect the composition or casing composition contains fibre. In one aspect the composition or casing composition contains starch and fibre. In one aspect the composition or casing composition contains starch and does not contain fibre. In one aspect the composition or casing composition contains fibre and does not contain starch.

In one preferred aspect starch is present in an amount of from 5 to 30 wt.% based on the total composition. Preferably starch is present in an amount of from 6 to 20 wt% based on the total composition. Preferably starch is present in an amount of from 8 to 12 wt% based on the total composition.

As discussed herein, in one aspect the present invention provides a casing composition. In the said casing composition preferably the combined amount of starch and fibre is 0.5 to 3.0 wt.% based on the total casing composition. Preferably the combined amount of starch and fibre is from 0.6 to 2.0 wt.% based on the total casing composition. Preferably the combined amount of starch and fibre is from 0.7 to 1.2 wt.% based on the total casing composition. Preferably the combined amount of starch and fibre is from 0.8 to less than 1.0 wt.% based on the total casing composition

Preferably starch is present in an amount of 0.5 to 3.0 wt.% based on the total casing composition. Preferably starch is present in an amount of 0.6 to 2.0 wt.% based on the total casing composition. Preferably starch is present in an amount of 0.7 to 1.2 wt.% based on the total casing composition. Preferably the starch is present in an amount of from 0.8 to less than 1 wt.% based on the total casing composition.

In one aspect the composition comprises starch. Preferably the starch is native starch. The starch may be selected from potato starch, maize starch, rice starch, wheat starch, tapioca starch and mixtures thereof. Preferably the starch is potato starch.

In one aspect the composition comprises fibre. The fibre may be selected from Wheat fibre, citrus fibre, soy fibre, beet fibre, carrot fibre, pea fibre and mixtures thereof.

### Meat Surface Culture

As will be understood by one skilled in the art, a meat surface culture is a microorganism suitable for growth on the surface of meat. More specifically a meat surface culture is a microorganism suitable for growth on the surface of salted meat. More specifically a meat surface culture is a non-toxinogenic microorganism suitable for growth on the surface of meat. More specifically a meat surface culture is a non-toxinogenic microorganism suitable for growth on the surface of salted meat. More specifically a meat surface culture is a non-toxinogenic yeast or mould suitable for growth on the surface of meat. More specifically a meat surface culture is a non-toxinogenic yeast or mould suitable for growth on the surface of salted meat.

In one aspect the meat surface culture is selected from moulds of genus *Penicillium, Cylindrocarpon, Trichothecium, Verticillium,* yeasts of genus *Debaryomyces, Candida, Geotrichum, Rhodosporidium* and mixtures thereof. Thus in one aspect, the present invention provides a composition for preparation of a sausage casing, wherein the composition comprises
(i) alginate;
(ii) one or more microorganisms selected from moulds of genus *Penicillium, Cylindrocarpon, Trichothecium, Verticillium,* yeasts of genus *Debaryomyces, Candida, Geotrichum, Rhodosporidium* and mixtures thereof.

In one aspect the meat surface culture is selected from moulds of the species *Penicillium camembertii, Penicillium candidum, Penicillium album, Penicillium chrysogenum, Penicillium roquefortii, Verticillium lecanii, Trichothecium domesticum,* yeasts of the species *Candida famata (Debaryomyces hansenii), Candida utilis, Geotrichum candidum, Rhodosporidium infirmominiatum* and mixtures thereof. Thus in one aspect, the present invention provides a composition for preparation of a sausage casing, wherein the composition comprises
(i) alginate;
(ii) one or more microorganisms selected from moulds of the species *Penicillium camembertii, Penicillium candidum, Penicillium album, Penicillium chrysogenum, Penicillium roquefortii, Verticillium lecanii, Trichothecium domesticum,* yeasts of the species *Candida famata (Debaryomyces hansenii), Candida utilis, Geotrichum candidum, Rhodosporidium infirmominiatum* and mixtures thereof.

In one aspect the meat surface culture is selected from moulds of the species *Penicillium camembertii, Penicillium candidum, Penicillium album, Penicillium chrysogenum,* yeasts of the species *Candida famata (Debaryomyces hansenii),* and mixtures thereof.

In one aspect the meat surface culture is selected from *Penicillium nalgiovense, Penicillium candidum, Debaryomyces hansenii* and combinations thereof. In one aspect the meat surface culture comprises or is *Penicillium nalgiovense.* In one aspect the meat surface culture is a mixture of *Penicillium nalgiovense* and *Penicillium candidum.*

The meat surface culture may be present in any suitable amount to provide the desired effect on the surface of the meat. In one aspect the meat surface culture is present in the composition of the present invention in an amount of at least 1x10⁶ colony forming units (cfu) per gram of composition. In one aspect the meat surface culture is present in the composition of the present invention in an amount of at least 1x10⁷ colony forming units (cfu) per gram of composition.

In the composition of the present invention (which is suitable for preparing the water containing casing composition) the meat surface culture may be present in any suitable amount to provide the desired effect on the surface of the meat. In one aspect the meat surface culture is present in the casing composition of the present invention in an amount of at least 1x10⁵ colony forming units (cfu) per gram of casing composition. In one aspect the meat surface culture is present in the casing composition of the present invention in an amount of at least 1x10⁶ colony forming units (cfu) per gram of casing composition. In one aspect the meat surface culture is present in the casing composition of the present invention in an amount of at least 5x10⁶ colony forming units (cfu) per gram of casing composition.

### Process

As discussed herein, in one aspect the present invention provides a process for preparing a meat sausage, the process comprising the steps of
(a) preparing a casing composition as defined herein;
   and
(b)
   (i) applying the casing composition to a meat batter; and
   (ii) causing the casing composition to gel and thereby form a casing around the meat batter;
   or
(c)
   (i) causing the casing composition to gel and thereby form a casing; and
   (ii) disposing a meat batter within the casing.

In one aspect, the casing composition is applied to the meat batter caused to gel. Thus in this aspect there is provided a process for preparing a meat sausage, the process comprising the steps of
(a) preparing a casing composition as defined herein; and
(b)
   (i) applying the casing composition to a meat batter; and
   (ii) causing the casing composition to gel and thereby form a casing around the meat batter.

In one aspect, the casing composition is caused to gel, casing and the meat batter is then disposed within that formed casing. Thus in this aspect there is provided a process for preparing a meat sausage, the process comprising the steps of
(a) preparing a casing composition as defined herein; and
(b)
   (i) causing the casing composition to gel and thereby form a casing; and
   (ii) disposing a meat batter within the casing.

Methods for causing the casing composition containing alginate to gel are known to those skilled in the art. Typically, the casing composition is caused to gel by contacting it to a solution of calcium ions. The solution may contain any source of calcium ions suitable for food manufacture. In one aspect, the solution of calcium ions is obtained from a calcium salt selected from calcium chloride and calcium lactate.

Suitable concentrations of calcium ions in solution may be determined by one skilled in the art. In one aspect, the concentration of calcium in the solution of calcium ions is from 3 to 8% wt% based on the solution.

Further steps for processing sausage once prepared may be practised and fall within the scope of the present invention. In one aspect, the process comprises the further step of drying the sausage.

### Kit

As discussed herein, in one aspect the present invention provides a kit for preparation of a sausage casing, wherein the kit comprises
(i) alginate;
(ii) a meat surface culture;
   wherein the alginate and meat surface culture are separate from each other, together with instructions for the preparation of a casing composition comprising
   (i) alginate;
   (ii) a meat surface culture
   (iii) water in an amount of at least 50 wt.% based on the total casing composition.

In one embodiment, a kit is provided that comprises the alginate and the meat surface as described herein separate from each other and in combination with instructions. The instructions may indicate the intended usage for which the composition, storage information, dosing information and/or instructions regarding how to apply the composition. The kit may also comprise packaging materials. The packaging material may comprise a container for housing the composition. The kit may also optionally comprise additional components, such as dosing apparatus for preparation of the casing composition. The kit may comprise the composition in single or multiple dose forms.

It is noted that the packaging material used in kits according to the present invention may form a plurality of divided containers such as a divided bottle, a divided pouch or a divided foil packet. The container can be in any conventional shape or form as known in the art which is made of a food safe material, for example a paper or cardboard box, a glass or plastic bottle or jar, or a re-sealable bag. The container that is employed will depend on the exact dosage form involved, for example a conventional cardboard box would not generally be used to hold a frozen composition. It is feasible that more than one container can be used together in a single package to market a single dosage form. Typically the kit includes directions for the combination of the separate components.

As discussed herein, in one aspect the present invention may further combine with the alginate other materials such as hydrocolloids, starch and/or fibres. It will be appreciated by one skilled in the art that if the composition is to be provided containing further functional materials these should be provided in the part of the kit containing the alginate. For example other materials such as hydrocolloids, starch and/or fibres may be combined with the alginate in a single package part of the kit.

### Further Aspects

As discussed herein, the present invention provides a composition for preparation of a sausage casing. It will be understood by one skilled in the art that the composition is suitable for the preparation of a sausage casing. However, the present invention is not limited to the process for the preparation of the sausage casing and the present invention encompasses the composition per se. Thus in a further aspect the present invention provides a composition comprising
(i) alginate;
(ii) a meat surface culture.

The present invention also provides a casing composition comprising
(i) alginate;
(ii) a meat surface culture
(iii) water in an amount of at least 50 wt.% based on the total casing composition.

The present invention also provides a kit comprising
(i) alginate;
(ii) a meat surface culture;
   together with instructions for the preparation of a casing composition comprising
   (i) alginate;
   (ii) a meat surface culture
   (iii) water in an amount of at least 50 wt.% based on the total casing composition.

It will also be understood by one skilled in the art that the essential components of the compositions of the present invention are defined herein. Unless otherwise stated, the presence of other components is not excluded. However, in one aspect the present invention provides the compositions containing only be listed components or only the listed components together with other components which do not have a material effect on the function of the listed components. Thus in one aspect the present invention provides a composition for preparation of a sausage casing, wherein the composition consists of or consists essentially of
(i) alginate;
(ii) a meat surface culture; and
(iii) optionally a further hydrocolloid selected from cellulose gum, guar gum, locust bean gum, microcrystalline cellulose, carrageenan, pectin, gellan, glucomanans, succino-glucan and mixtures thereof.

In one aspect the present invention provides a casing composition for preparing sausage casing, wherein the casing composition consists of or consists essentially of
(i) alginate;
(ii) a meat surface culture
(iii) water in an amount of at least 50 wt.% based on the total casing composition; and
(iv) optionally a further hydrocolloid selected from cellulose gum, guar gum, locust bean gum, microcrystalline cellulose, carrageenan, pectin, gellan, glucomanans, succino-glucan and mixtures thereof.

In one aspect the present invention provides a kit for preparation of a sausage casing, wherein the kit comprises
(i) alginate;
(ii) a meat surface culture; and
(iii) optionally a further hydrocolloid selected from cellulose gum, guar gum, locust bean gum, microcrystalline cellulose, carrageenan, pectin, gellan, glucomanans, succino-glucan and mixtures thereof.
   together with instructions for the preparation of a casing composition comprising
   (i) alginate;
   (ii) a meat surface culture;
   (iii) optionally a further hydrocolloid selected from cellulose gum, guar gum, locust bean gum, microcrystalline cellulose, carrageenan, pectin, gellan, glucomanans, succino-glucan and mixtures thereof; and
   (iv) water in an amount of at least 50 wt.% based on the total casing composition.

The composition of the present invention may be delivered in any suitable form. For example, the composition of the present invention may be provided in frozen or dried form. When in frozen form, the composition may be provided as a frozen pellet. When dried form, the composition may be provided as a powder or as a freeze dried product.

When referring to the kit of the present invention, the alginate and the meat surface culture may be delivered in any suitable form. Thus, in one embodiment, the alginate is provided in a format selected from liquid, frozen form and dried form, and the meat surface culture is provided a format selected from liquid, frozen form and dried form. In one embodiment, the alginate is provided in frozen form and the meat surface culture is provided in frozen form. In another embodiment, the alginate is provided in dried form (e.g., freeze dried) and the meat surface culture is provided in dried form (e.g., freeze dried). In one embodiment, the alginate is provided in powder form and the meat surface culture is provided in powder form.

The invention will now be described, by way of example only, with reference to the following Examples.

### EXAMPLES

### Preparation of Meat Batter

The following meat batter was prepared.

| **Ingredient Name** | **g** | **%** |
|---|---|---|
| Pork Shoulder 3% - 6% Fat 13516022-- | 7748,40 | 70,440 |
| Pork Back Fat 21606022-- | 2200,00 | 20,000 |
| Nitrite Salt 0.6% 97727025-- | 308,00 | 2,800 |
| Garlic Powder 120 030-- | 550,00 | 5,000 |
| Dextrose - K 002325-- | 27,50 | 0,250 |
| Sucrose - Sugar 550 10330-- | 27,50 | 0,250 |
| Lactose, Low Spore Count 167655-- | 110,00 | 1,000 |
| Sodium Ascorbate Powder 1202388-- | 5,50 | 0,050 |
| Pepper, White, Ground 120 065-- | 22,00 | 0,200 |
| TEXEL SP 362 --- | 1,10 | 0,010 |
| **Total** | **11000,00** | **100,000** |

TEXEL SP 362 is a meat maturation culture

### Preparation of Composition for formulating a Casing Composition

A composition according to the present invention was prepared having the following ingredients

### Preparation of alginate blend Test Sample PL 20140:

| Ingredients | % |
|---|---|
| Sodium Alginate | 80 |
| Cellulose Gum 1250 | 10 |
| Starch 800, Native potato | 10 |

The dry ingredients were mixed. Prior to mixing the ingredients were sieved to avoid any lumps which could cause problems during the extrusion process.

3 samples of composition were prepared. One sample was a base composition containing only the ingredients listed above. A further sample was prepared which a culture TEXEL PNT1 was added. A third sample was prepared which a culture TEXEL NEO2000 was added. The cultures were added in amounts required based on the declared dosing information of the commercial product. These dosages provided cultures present in an amount of 5.75x10⁶ cfu per gram of composition for NEO2000 and cultures present in an amount of 6.90x10⁶ cfu per gram of composition for PNT1.

TEXEL PNT1 is a culture of *Penicillium nalgiovense.* TEXEL NEO2000 is a culture which is a mixture of *Penicillium nalgiovense* and *Penicillium candidum.*

### Preparation of Casing Composition

Samples of alginate gel were prepared from the test sample PI 20140. The gel had the following composition:

| | 9% Blend |
|---|---|
| Alginate blend (g) PL 20140 | 90 |
| Water (g) | 910 |
| Total (g) | 1000 |

The samples were prepared as follows. The water, preferably cold, was weighed into a bowl chopper. The gel can optionally be pH adjusted to pH∼4.5 by addition of acidifier into water. The alginate blend and the surface culture was slowly added in the bowl chopper at low speed. This was mixed for a couple of minutes while the sides of the bowl chopper were rinsed manually with a scraper to ensure a homogenous mixture in the bowl chopper. The mixing was stopped, the lid opened to clean the sides of gel lumps. The mixing was started again for a couple of minutes and the rinsing procedure then repeated. The lid was closed and the mixing started again and while applying full vacuum for a couple of minutes. The total mixing time was approximately 10 minutes. On completion of the mixing, the mixing was stopped and the vacuum taken off. The final gel was carefully screened for any lumps, or undissolved material. If there was any, the mixing was repeated and vacuum applied at the end.

When the gel had totally dissolved and the air had been removed via the vacuum supply, the gel was deposited into buckets and closed with a lid. The gel can be stored at 5°C or it can be used directly in a sausage casing machinery.

We found that it is important for the functionality that the hardness of the water used for preparations of the gel is well known. Precautions must be taken if the hardness is high. The hardness of the water will come from Mg⁺ and Ca⁺⁺ ions. Divalent ions like Ca⁺⁺ are found to have a negative impact on the final functionality of the alginate and Ca complexing during the setting bath. In cases where the hardness is high, distilled or ion exchanged water may be used in place of tap water.

A settling bath containing CaCl₂ at a concentration of 10-30 % (based on CaCl₂) was prepared. Thus calcium was present in an amount of 3 to 8 % in the setting bath.

The gel was extruded out on the surface of the meat dough for fermented sausage in the manner described below.

### Production of sausages

The meat dough was processed on a ConPro 200 from Handtmann (GER). The length of the sausages was 240 mm, the inner caliber was 11 mm, head caliber 19 mm, casing layer thickness 0,2 mm and the amount of alginate casing was 4,1 %. The alginate casing was fixated by a 20 % w/w CaCl₂ solution bath.

### Dipping of sausages (not in accordance with the invention)

The sausages prepared with the base sausage casing i.e. the casing containing no culture were dipped in a bath containing the culture TEXEL PNT1 or a part containing the culture TEXEL NEO2000. This solution was made in a way that 25 litres tap water with a temperature between 10-25°C was prepared. Half a pouch of surface cultures was added to this water and mixed with an eggbeater for approximately 2 minutes until the surface culture has been dissolved completely. Afterwards the sausages were dipped into this solution in a way that they are fully covered with this solution. The sausages were then ready to be placed into the fermentation chamber.

### Sausages Evaluated

The following sausages are prepared and evaluated.

| Culture | inner tube [mm] | Head calibre [mm] | Portion volume [cm³] | Casing-quantity [%] | CaCl2 bath [%] |
|---|---|---|---|---|---|
| | | | | | |
| Dipped - PNT 1 | 11 | 17 | 40 | 4.0% | 20% |
| Dipped - NEO 2000 | 11 | 17 | 40 | 4.0% | 20% |
| In alginate gel - PNT1 | 11 | 17 | 40 | 4.0% | 20% |
| In alginate gel - NEO 2000 | 11 | 17 | 40 | 4.0% | 20% |
| Dipped - PNT 1 | 17 | 21 | 65 | 4.0% | 20% |
| Dipped - NEO 2000 | 17 | 21 | 65 | 4.0% | 20% |
| In alginate gel - PNT1 | 17 | 21 | 65 | 4.0% | 20% |
| In alginate qel - NEO 2000 | 17 | 21 | 65 | 4.0% | 20% |

The length of each sausage was 194mm, and the casing type was a 9 percent gel as described above.

The sausages were evaluated 5 days, 7 days and 10 days after stuffing. At the five-day and 7 day evaluation point it was found that the dipped sausages showed a more complete coverage in culture growth on the outer surface of the sausage. This was to be expected in view of the placing of the culture on the outer surface by dipping. After 10 days the difference between the dipped sausages and those containing culture within the casing was significantly less marked. The sausages containing culture in the casing were found to have an acceptable coverage. Therefore acceptable products were provided wherein the labour-intensive and potentially contaminating step of dipping was avoided.

All publications mentioned in the above specification are herein incorporated by reference. Various modifications and variations of the described methods and system of the invention will be apparent to those skilled in the art without departing from the scope and spirit of the invention. Although the invention has been described in connection with specific preferred embodiments, it should be understood that the invention as claimed should not be unduly limited to such specific embodiments. Indeed, various modifications of the described modes for carrying out the invention which are obvious to those skilled in chemistry or related fields are intended to be within the scope of the following claims.

## Claims

1. A composition for preparation of a sausage casing, wherein the composition comprises
(i) alginate;
(ii) a meat surface culture.

2. A composition according to claim 1 wherein the alginate is sodium alginate or potassium alginate, in particular is sodium alginate

3. A composition according to any one of the preceding claims wherein the meat surface culture is selected from moulds of genus *Penicillium, Cylindrocarpon, Trichothecium, Verticillium,* yeasts of genus *Debaryomyces, Candida, Geotrichum, Rhodosporidium* and mixtures thereof.

4. A composition according to any one of the preceding claims wherein the meat surface culture is selected from moulds of the species *Penicillium camembertii, Penicillium candidum, Penicillium album, Penicillium chrysogenum, Penicillium roquefortii, Verticillium lecanii, Trichothecium domesticum,* yeasts of the species *Candida famata (Debaryomyces hansenii), Candida utilis, Geotrichum candidum, Rhodosporidium infirmominiatum* and mixtures thereof, in particular is selected from moulds of the species *Penicillium camembertii, Penicillium candidum, Penicillium album, Penicillium chrysogenum,* yeasts of the species *Candida famata (Debaryomyces hansenii),* and mixtures thereof.

5. A composition according to any one of the preceding claims wherein the meat surface culture is selected from *Penicillium nalgiovense, Penicillium candidum, Debaryomyces hansenii* and combinations thereof, in particular wherein the meat surface culture comprises or is *Penicillium nalgiovense* or wherein the meat surface culture is a mixture of *Penicillium nalgiovense* and *Penicillium candidum.*

6. A composition according to any one of the preceding claims further comprising a further hydrocolloid selected from cellulose gum, guar gum, locust bean gum, microcrystalline cellulose, carrageenan, pectin, gellan, glucomanans, succino-glucan and mixtures thereof, in particular wherein the further hydrocolloid is cellulose gum.

7. A composition according to any one of the preceding claims wherein the alginate is present in an amount of 40 to 90 wt.% based on the total composition, preferably in an amount of 70 to 90 wt.% based on the total composition.;

8. A composition according to any one of claims 6 to 7 wherein the further hydrocolloid is present in an amount of 5 to 50 wt.% based on the total composition, preferably in an amount of 5 to 30 wt.% based on the total composition.

9. A composition according to any one of the preceding claims further comprising starch, fibre or a mixture thereof, in particular further comprising starch.

10. A composition according to claim 9 wherein the combined amount of starch and fibre is 5 to 50 wt.% based on the total composition, preferably 5 to 30 wt.% based on the total composition.

11. A composition according to any one of the preceding claims wherein the composition is frozen or dried.

12. A casing composition for preparing sausage casing, the casing composition comprising
(a) a composition as defined in any one of claims 1 to 10, and
(b) water in an amount of at least 50 wt.% based on the total casing composition.

13. A casing composition according to claim 12 comprising
(a) a composition as defined in any one of claims 1 to 10, in an amount of 5 to 14 wt.% based on the total casing composition, such as in an amount of 5.5 to 12 wt.% based on the total casing composition, such as in an amount of 7 to 12 wt.% based on the total casing composition, such as in an amount of 8 to 10 wt.% based on the total casing composition.

14. A process for preparing a meat sausage, the process comprising the steps of
(a) preparing a casing composition as defined in claim 12 or 13;
and
(b)
(i) applying the casing composition to a meat batter; and
(ii) causing the casing composition to gel and thereby form a casing around the meat batter;
or
(c)
(i) causing the casing composition to gel and thereby form a casing; and
(ii) disposing a meat batter within the casing.

15. A process according to claim 14 wherein the casing composition is caused to gel by contacting it to a solution of calcium ions.

16. A process according to any one of claims 14 to 15 comprising the step of
(c)
(i) causing the casing composition to gel and thereby form a casing; and
(ii) disposing a meat batter within the casing.

17. A process according to any one of claims 14 to 16 comprising a further step of drying the sausage.

18. A kit for preparation of a sausage casing, wherein the kit comprises
(i) alginate;
(ii) a meat surface culture;
together with instructions for the preparation of a casing composition as defined in claim 18 or 19.

19. Use of a casing composition as defined in claim 12 or 13 for casing a sausage.
